# EUROPEAN PATENT APPLICATION

(11) **EP 1 710 741 A1**
(43) Date of publication of application: **11.10.2006**
(21) Application number: 06111460.9
(22) Date of filing: 21.03.2006
(51) Int. Cl.: G06Q 10/00

(54) **Comparing and contrasting models of business**

(30) Priority: 31.03.2005 US 94926
(71) Applicant: MICROSOFT CORPORATION, Redmond, WA 98052 (US)
(72) Inventor: Appel, David Benjamin, Redmond, WA 98052 (US); Davidson, Elizabeth L., Redmond, WA 98052 (US); Merrifield, Jr., Eric Sabbaton, Redmond, WA 98052 (US); Levy, Marc, Redmond, WA 98052 (US); Isaacs, Scott M., Redmond, WA 98052 (US); Homann, Ulrich, Redmond, WA 98052 (US)
(74) Representative: Grünecker, Kinkeldey, Stockmair & Schwanhäusser Anwaltssozietät

(57) **Abstract**

The present invention extends to comparing and contrasting models of business. Model processing modules implement formal operators that can be used to manipulate models of business. A compare operator can be used to compare similarly typed models of business. A contrast operator can be used to contrast differ types of business models. A constraint operator can be used to check business models for compliance with constraints. A refinement operator can be used to refine business models based on industry (or otherwise more) specific data. A compose operator can be used to compose new business models from portions of other business models.

## Description

### CROSS-REFERENCE TO RELATED APPLICATIONS

Not applicable.

### BACKGROUND OF THE INVENTION

**1. The Field of the Invention**

The present invention relates to business modeling and, more particularly, to comparing and contrasting models of business.

**2. The Relevant Technology**

Businesses can be complex and are often assembled (potentially in an ad-hoc manner) from multiple interrelated and interdependent business functions. In some environments, business functions (e.g., outsourced business functions) even span multiple corporations, increasing the complexity of assembly and analysis. Unfortunately, interactions and interdependencies between business functions (whether in the same or different corporations) are often not well defined and/or not well documented. That is, a high level view of a business is often not well connected to the myriad of details of how the business operates. For example, a manager or owner may hold knowledge of how a business is assembled in a way that is difficult to communicate in a uniform manner (e.g., informally "in heir head"). Thus, other managers (e.g., in other divisions of a corporation) or employees may have difficulty accessing such knowledge and even if they could access the knowledge, it is unlikely that it would be in a context that would be valuable to them acquisition

However, implementing changes in business functionality often includes the work of many individuals, many of which do not know and have no way to determine how the business is assembled overall, and their own views cannot be "connected" to or related to the views of others because of differences in context and language. Thus, even when adding or removing a business function as a planned event, there may be no efficient mechanism to determine how the addition or removal of the business function will affect other interrelated and interdependent business functions. Accordingly, changes to a business can result to unanticipated (and often negative) effects once implemented.

Thus, while a general understanding of business functions may be difficult to determine, such an understanding is important to a business in order to, for example, prepare for change in terms of costs, benefits, risks, alternatives, and dependencies for instance. For example, a manager may want to be able to deploy and manage business functions according to prescriptive guidance (e.g., best practices) when it is available and be able to monitor and enforce compliance in running of the business. Accordingly, various techniques have been developed to model and represent businesses making the dissemination of business function information somewhat more efficient.

Some modeling techniques include manual generation of diagrams that represent business processes that describe how work is done. For example, trained individuals can analyze all aspects of a business to identify business functions and interrelationships and interdependencies between the business functions. Based on the analysis, the trained individuals can generate the representative diagrams. However, accurate analysis of a business from a business function point-of-view can take an extended period of time. Further, once representative diagrams are generated such diagrams are not easily modified.

However, since many business processes are dynamic (i.e., change frequently over time), a manually generated representation of business processes are often outdated before it is even completed. Further, even if a manually generated representation of business processes was accurate at the time it was generated, any change in business related processes after the business representation was generated would cause the business representation to be incorrect - and any decisions unknowingly based on an outdated representation would be at risk. Thus, manually generated representations provide limited, if any, reliable ability for a business to determine how simulated and/or hypothetical changes to various business capabilities would affect the business.

At least in part as a result of the deficiencies in manually generated business representations, some computerized techniques have been developed to generate business representations. These computerized techniques use various techniques to represent business and the required business functions mostly focused on modeling business processes and detailed procedures that support those functions. For example, some computerized techniques present a graphical view of business processes at a user-interface. To some limited extent, these graphical views can be altered to simulate the effect of different business capabilities on a business.

However, both manually generated and computer generated models are typically unstructured, and thus lack any mechanism to provide varied levels of detail. For example, it is difficult (and essentially impossible with manually generated models) to efficiently generate a single model that can provide both a higher level view (e.g., for senior management) and at the same time a lower level view (e.g., for those employees implementing the business function) of the same business function. Further, these techniques typically generate business models that lack formal operators. Thus, even computer generated models may have limited usefulness since there is no way to manipulate the computer generated models. For example, without formal operators there may be no way to compare similarly typed business models, contrast differently typed business models, constrain an instance of a business model, refine a business model based, for example, for a specific industry, or compose a business model from a collection of other business models.

With respect to model comparison, conventional modeling techniques typically do not include formal operators for a business to compare itself, its model of operation (business model), or its configuration to other businesses, other models of operation, or other business configurations. For example, there is typically no way to compare similar businesses, let alone parts of businesses, to one another or to compare a business to best practice business models and/or configurations. This inability to compare businesses can limit a business' understanding and analysis of how effective it is in the marketplace and/or how the business can improve operations (e.g., through implementing additional business functions, removing duplicate business functions, or changing operational decisions such as sourcing of business functions).

With respect to constraints, conventional modeling techniques typically do not include formal operators for constraining a business model to satisfy specified constraints or checking a business model for compliance with specified constraints. Thus, even if a business model includes a particular business function, there may be no way to constrain the business function to a specified use or determine if the business function is sufficiently constrained for a specified use. For example, a transportation outsourcer may include a number of business functionalities including a cross-docking functionality (trucks full of one type of product unload on one side of the dock, trucks picking up various products load from the other side of the dock). However, there may be no way for a business to determine if the transportation outsourcer has cross-docking capability. Thus, the business may unknowingly contract with the transportation outsourcer and then subsequently realize that the transportation outsourcer lacks cross-docking capability.

With respect to composition, conventional modeling techniques typically do not include formal operators for accessing different models (or portions of different models) from a pool of models and composing the accessed models (or portions of different models) into a new model. For example, there may be no way to compose a business model for an innovative, new banking business from elements of pre-defined models of a retail banking model, a transaction banking model, and a product banking model. Thus, the new business may have no way to create an innovative business model by combining existing efforts in the business or industry in a reliable and accurate way.

With respect to refinement, conventional modeling techniques typically do not include formal operators for refining a more generic business model into (potentially one or more) more specific business models. For example, an accounts receivable function may have some differences across different industries (health care, banking, retail, etc.), across different sized business (e.g., sole proprietorship, medium-sized corporation, enterprise, etc), and in different geographic locations (e.g., Hong Kong, Europe, United States, etc). However, there may be no way to refine a generic accounts receivable model such that the accounts receivable model is appropriate for a specified industry, for a business of a specified size, or in a specified geographic location. Thus, modeling a business based on the more generic accounts receivable function may yield an inaccurate (or at least incomplete) business model. As a result, a business may have no way to compare its actual business functionality to other models (since the functionality can not be accurately modeled).

In some environments, modeling techniques (whether manual or computerized) are used to model (typically combining) different layers (or types) of business data, such as, for example, organizational structures, procedures, process flows, and supporting technology. Thus, a business can be represented through a variety of different business models. However, business modeling mechanisms typically do not include formal operators for contrasting or identifying relationships between different types of related models for the same business. For example, there is typically no mechanism for identifying relationships between a model of business functions and a corresponding model of a service network (e.g., of Web based services) used to implement those business functions.

This inability to contrast different types of models can limit a business' understanding of how different business aspects (e.g., operations, services, personnel, etc.) interoperate and depend on one another. For example, a business may have no way to know that the addition of a specified business operation will require a corresponding addition of one or more services. Similarly, a business may have no way to know that a service is being underutilized by corresponding business operations (and thus could potentially be used for other business operations). Furthermore, a business may have no way to reliably and accurately decide what effects an outsourcing decision of a specific business function might have for the operation of the business or its related models, such as the services network (e.g., of Web based services).

Accordingly, what would be advantageous are systems, methods, computer program products, and data structures that facilitate flexible manipulation of business models.

### BRIEF SUMMARY OF THE INVENTION

The foregoing problems with the prior state of the art are overcome by the principles of the present invention, which are directed towards methods, systems, computer program products, and data structures for comparing and contrasting models of business. In some embodiments, a computer system accesses a first instance of a structured business model (structured in accordance with a data model) representing an existing business architecture, the first structured business model being. The computer system accesses a second instance of the structured business model (structured in accordance with a data model) representing a second business architecture. The computer system compared the first instance of the structured business model to the second instance of the structured business model. The computer system identifies any differences between the existing business architecture and the second business architecture. The computer system evaluates the sufficiency of the existing business architecture based on identified differences between the existing business architecture and the second business architecture.

In other embodiments, a computer system accesses a structured business model representing a first business layer of a business architecture. The structured business model modeling one or more first business layer components of the first business layer in accordance with a structured data model. The computer system accessing a second structured model representing a second business layer. The second structured model modeling one or more second business layer components of the second different business layer. The computer system maps relationships between the one or more first business layer components and the one or more second business layer components such that it can be determined how changes in the configuration of the first business layer impact the second business layer and how changes in the configuration of the second business layer impact the first business layer. The computer system utilizes the mapped relationships to contrast the structured business model to the second structured model.

In further embodiments, a computer system accesses a structured business model (structured in accordance with a data model) of first business components representing a valid business architecture. The first business components having corresponding first property values that indicate compliance with one or more constraints. The computer system accesses a second structured business model of second business components representing an existing business architecture, the second business components have second property values. The computer system compares at least a subset of the compliant first property values with a corresponding at least a subset of the second property values to check the second property values for compliance with the one or more constraints. The computer system determines if the second structured business model is valid based on the comparison.

In yet other embodiments, a computer system accesses a structured business model (structured in accordance with a data model) representing a business architecture. The computer system identifies a specific business architecture that is to be modeled based on the structured business model, the specific business architecture being more specific than the business architecture. The computer system accesses business specific data for the specified business architecture. The computer system refines the structured business model into a business specific structured data model based on the accessed business specific data. The computer system models the specified business architecture in accordance with the business specific structured data model.

In further other embodiments, a computer system receives an indication that a business architecture including a set of business components is to be modeled. The computer system identifies that a first portion of the set of business components is included in a first structured business model, the first structured business model being selected from among a plurality of different business models. The computer system extracts the first portion of the set of business components from the first structured business model. The computer system identifies that a second portion of the set of business components is included in a second structured business model, the second structured business model being selected from among the plurality of different business models. The computer system extracts he second portion of the set of business components from the second structured business model. The computer system composes at least the first portion and second portion of the set of business components into a model of the business architecture.

These and other features of the present invention will become more fully apparent from the following description and appended claims, or may be learned by the practice of the invention as set forth hereinafter.

### BRIEF DESCRIPTION OF THE DRAWINGS

To further clarify the above and other advantages and features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:

Figure 1 illustrates an example computer architecture that can be used to compare and contrast models of business

Figure 2 illustrates example architecture of operations that can be performed on business models.

Figure 3 illustrates an example capability modeling schema that can be used for efficiently and flexibly business modeling based upon structured business capabilities.

Figure 4 illustrates an example mapping between a business capability model and a service network model.

Figure 5 illustrates an example flowchart of a method for comparing similarly typed business models.

Figure 6 illustrates an example flowchart of a method for contrasting different types of business models representing corresponding different layers of a business architecture.

Figure 7 illustrates an example flowchart of a method for validating that a business model complies with one or more constraints.

Figure 8 illustrates an example flowchart of a method for refining a business model.

Figure 9 illustrates an example flowchart of a method for composing a business model.

Figure 10 illustrates a suitable operating environment for the principles of the present invention.

### DETAILED DESCRIPTION OF THE PREFERRED EMBODIMENTS

The principles of the present invention provide for comparing and contrasting models of business. In some embodiments, a computer system accesses a first instance of a structured business model (structured in accordance with a data model) representing an existing business architecture, the first structured business model being. The computer system accesses a second instance of the structured business model (structured in accordance with a data model) representing a second business architecture. The computer system compared the first instance of the structured business model to the second instance of the structured business model. The computer system identifies any differences between the existing business architecture and the second business architecture. The computer system evaluates the sufficiency of the existing business architecture based on identified differences between the existing business architecture and the second business architecture.

In other embodiments, a computer system accesses a structured business model representing a first business layer of a business architecture. The structured business model modeling one or more first business layer components of the first business layer in accordance with a structured data model. The computer system accessing a second structured model representing a second business layer. The second structured model modeling one or more second business layer components of the second different business layer. The computer system maps relationships between the one or more first business layer components and the one or more second business layer components such that it can be determined how changes in the configuration of the first business layer impact the second business layer and how changes in the configuration of the second business layer impact the first business layer. The computer system utilizes the mapped relationships to contrast the structured business model to the second structured model.

In further embodiments, a computer system accesses a structured business model (structured in accordance with a data model) of first business components representing a valid business architecture. The first business components having corresponding first property values that indicate compliance with one or more constraints. The computer system accesses a second structured business model of second business components representing an existing business architecture, the second business components have second property values. The computer system compares at least a subset of the compliant first property values with a corresponding at least a subset of the second property values to check the second property values for compliance with the one or more constraints. The computer system determines if the second structured business model is valid based on the comparison.

In yet other embodiments, a computer system accesses a structured business model (structured in accordance with a data model) representing a business architecture. The computer system identifies a specific business architecture that is to be modeled based on the structured business model, the specific business architecture being more specific than the business architecture. The computer system accesses business specific data for the specified business architecture. The computer system refines the structured business model into a business specific structured data model based on the accessed business specific data. The computer system models the specified business architecture in accordance with the business specific structured data model.

In further other embodiments, a computer system receives an indication that a business architecture including a set of business components is to be modeled. The computer system identifies that a first portion of the set of business components is included in a first structured business model, the first structured business model being selected from among a plurality of different business models. The computer system extracts the first portion of the set of business components from the first structured business model. The computer system identifies that a second portion of the set of business components is included in a second structured business model, the second structured business model being selected from among the plurality of different business models. The computer system extracts he second portion of the set of business components from the second structured business model. The computer system composes at least the first portion and second portion of the set of business components into a model of the business architecture.

Embodiments within the scope of the present invention include computer-readable media for carrying or having computer-executable instructions or data structures stored thereon. Such computer-readable media may be any available media, which is accessible by a general-purpose or special-purpose computer system. By way of example, and not limitation, such computer-readable media can comprise physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system.

In this description and in the following claims, a "computer network" is defined as one or more data links that enable the transport of electronic data between computer systems and/or modules. When information is transferred or provided over a computer network or another communications connection (either hardwired, wireless, or a combination of hardwired or wireless) to a computer system, the connection is properly viewed as a computer-readable medium. Thus, any such connection is properly termed a computer-readable medium. Combinations of the above should also be included within the scope of computer-readable media. Computer-executable instructions comprise, for example, instructions and data which cause a general-purpose computer system or special-purpose computer system to perform a certain function or group of functions. The computer executable instructions may be, for example, binaries, intermediate format instructions such as assembly language, or even source code.

In this description and in the following claims, a "computer system" is defined as one or more software modules, one or more hardware modules, or combinations thereof, that work together to perform operations on electronic data. For example, the definition of computer system includes the hardware components of a personal computer, as well as software modules, such as the operating system of the personal computer. The physical layout of the modules is not important. A computer system may include one or more computers coupled via a computer network. Likewise, a computer system may include a single physical device (such as a mobile phone or Personal Digital Assistant "PDA") where internal modules (such as a memory and processor) work together to perform operations on electronic data.

In this description and the following claims, a "business layer" is defined as a view of specified characteristics of a business. For example, a business can be viewed based on its organizational structure, its business capabilities, it business processes, its service network, etc. Thus, a business can include a corresponding organizational layer, capability layer, process flow layer, service network layer, etc.

In this description and the following claims "business architecture" is defined as the overall design of at least a portion of a business. A business architecture for a company or one or more portions of a company can include one or more business layers that span various boundaries inside and/or outside of the company. For example, a company's business architecture can span externally physical boundaries (e.g., walls, buildings, etc.), internally physical boundaries (e.g., divisions, departments, etc.), and logical boundaries (e.g., a fiscal year end, a perceived service boundary, security etc.). Thus, an outsourced business capability can be viewed as part of the business architecture for a company even though the outsourced business capability is not performed by the company. Business architectures can be past, current (as-is), or future (to-be) architectures of an entire business or one or more portions of a business. A portion of a business can include e a specific sub-network or set of sub-networks of business capabilities.

Generally, the stability (or volatility) of different types of business models corresponding to different business layers can vary. That is, one type of business model can be more or less stable relative to other types of business models. For example, a business procedure model modeling business procedures may be more stable than a business organizational model modeling business organizational structure. On the other hand, business procedure modeling business procedures may be less stable than a business capability model modeling business capabilities.

In this description and in the following claims, a "schema" is defined as an expression of a shared vocabulary between a plurality of computer systems or modules that allows the plurality of computer systems or modules to process data according the expressed shared vocabulary. A schema can define and describe classes of data using constructs (e.g., name/value pairs) of a schema language. The schema constructs can be used to constrain and document the meaning, usage, and relationships of data types, elements and their content, attributes and their values, entities and their contents, and notations, as used in a specified application, such as, for example, a business capability model. Thus, any computer system or module that can access a schema can process data in accordance with the schema. Further, any computer system or module that can access a schema can compose or modify data for use by other computer systems and/or modules that can also access the schema.

A schema can be utilized to define virtually any data type including logical, binary, octal, decimal, hexadecimal, integer, floating-point, character, character string, user-defined data types, and combinations of these data types used to defined data structures. Some examples of user-defined data types are business capability properties, business capability inputs and outputs, business capability processes, business capability connections, and business capability service level expectations. A data type can also be defined to reference of link to other data types in a schema hierarchy.

An eXtensible Markup Language ("XML") schema is one example of a type of schema. An XML schema can define and describe a class of XML documents using schema constructs (e.g., name/value pairs) of an XML schema language. These schema constructs can be used to constrain and document the meaning, usage, and relationships of data types, elements and their content, attributes and their values, entities and their contents, and notations, as used in XML documents. Thus, schema is also defined to include Document Type Definitions ("DTD"), such as, for example, DTD files ending with a ".dtd" extension and World Wide Web Consortium ("W3C") XML Schemas, such as, for example, XML Schema files ending with a ".xsd" extension. However, the actually file extension for a particular DTD or XML schema is not important.

Those skilled in the art will appreciate that the invention may be practiced in computer network environments with many types of computer system configurations, including, personal computers, laptop computers, hand-held devices, multi-processor systems, microprocessor-based or programmable consumer electronics, network PCs, minicomputers, mainframe computers, mobile telephones, PDAs, pagers, and the like. The invention may also be practiced in distributed system environments where local and remote computer systems, which are linked (either by hardwired data links, wireless data links, or by a combination of hardwired and wireless data links) through a computer network, both perform tasks. In a distributed system environment, program modules may be located in both local and remote memory storage devices.

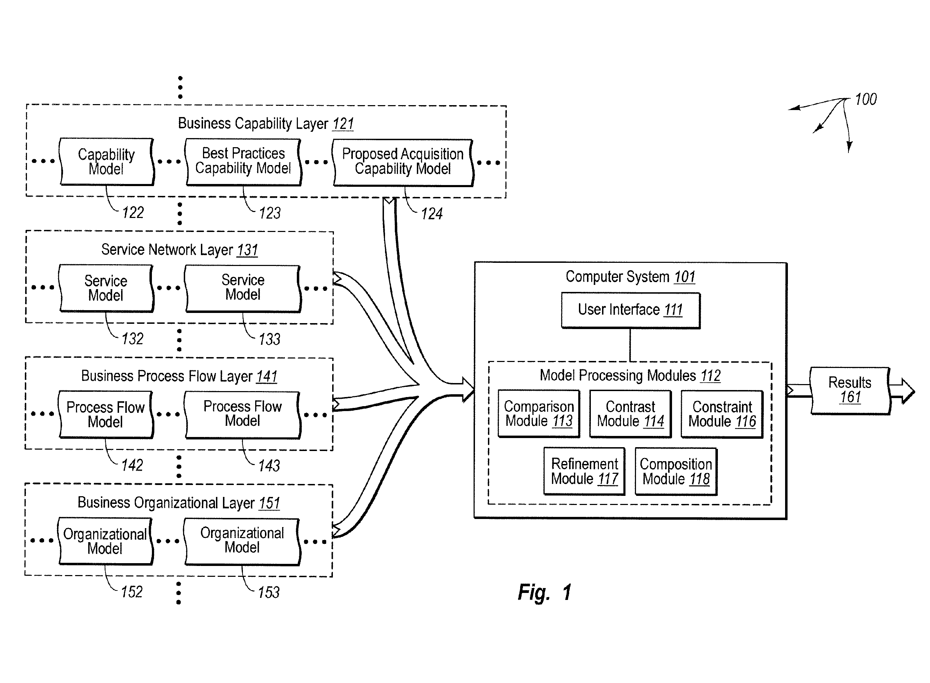

Figure 1 illustrates an example computer architecture 100 that can be used to compare and contrast business models. As depicted in computer architecture 100, computer system 101 includes user-interface 111 and model processing modules 112. User-interface 111 is configured to interface between a computer system user and computer system 101. User-interface 111 can provide an interface for the computer system user to enter data (e.g., selecting formal operations to perform on models of business) into model processing modules 112 and to view results of model processing modules 112.

Generally, model processing modules can include modules configured to perform formal operations on business models. For example, model processing modules 112 includes comparison module 113 configured to compare models of business, mapping module 114 configured to map between models of business, constraint module 116 configured to determine if models of business satisfy constraints, refinement module 117 configured to refine models of business for based on refinement criteria, and composition module configured to compose a model of business form other models of business. However, model processing modules 112 can also include other modules configured to perform other formal operations on business models.

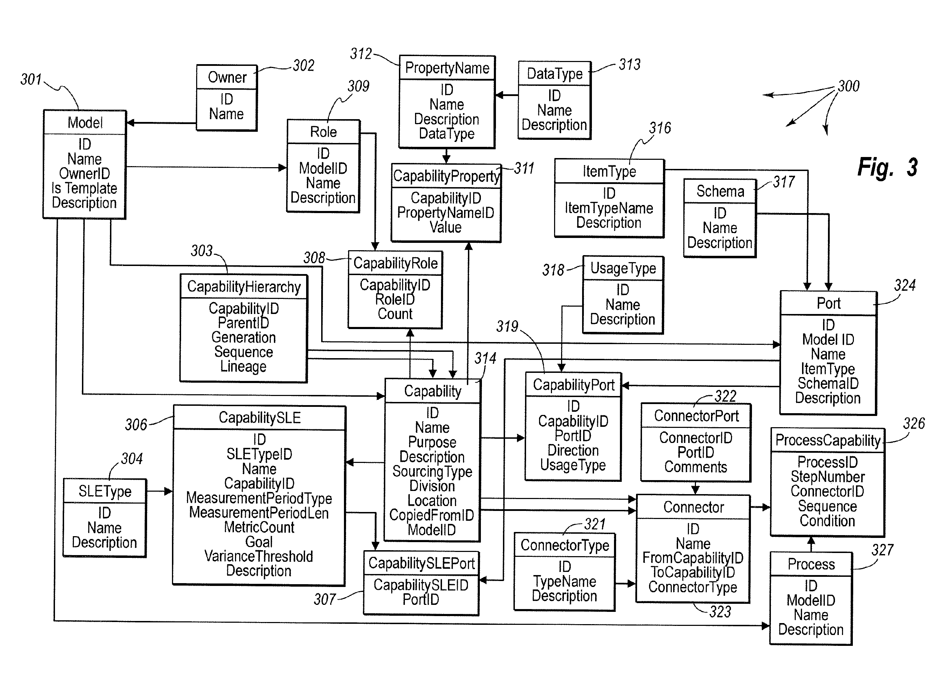

Generally, computer system 101 is configured to receive business models generated in accordance with appropriate data models, unstructured business models, and/or unstructured business data. In response to receiving unstructured business models and/or unstructured business data, computer system 101 can refer to the appropriate data models to generate business models in accordance with the data models. Figure 3 depicts one example of a business capability modeling schema 300 that will be described in further detail below.

A business layer within a business architecture can be modeled using a single data model. For example, it may be that a single business capability data model is used to model a business capability layer of a business architecture. However, a business layer can also be modeled using any of a plurality different data models. For example, it may be that any of a plurality of different business capability data models is used to model a business capability layer of a business architecture.

Further, the same business layer within different business architectures can be modeled using the same data model or similar data models. For example, it may be that the same data model is used to model a business capability layer of a first business architecture is also used to model a corresponding business capability layer of a second business architecture. In this description and in the following claims, a "similarly typed business models" are defined as models based on the same data model or similar data model.

However, different data models can be used to model the same business layer within different business architectures. For example, it may be that a first business capability data model is used to a model a business capability layer of a first business architecture and a second business capability data model is used to model a business capability layer of a second business architecture. Additionally, different data models can be used to model different business layers of the same business architecture. For example, it may be that a business capability data model is used to model a business capability layer of a business architecture and a service network data model is used to model a service network layer of the business architecture.

Thus, computer system 101 can access business models corresponding to different business layers (e.g., business capability layer 121, service network layer 131, business process flow layer 141, business organizational layer 151, etc.). For example, computer system 101 can access one or more of capability model 122, best practices capability model 123, proposed acquisition capability model 124, service models 132 and 133, process flow models 142 and 143, and organizational models 152 and 153. A vertical series of two consecutive periods (a vertical ellipsis) before, between, and after the expressly depicted layers represents that computer architecture 100 can include other additional layers. A horizontal series of two consecutive periods (an ellipsis) before, between, and after the expressly depicted models in each layer represents that each layer can include other additional models.

Computer system 101 can perform one or more formal operations (e.g., comparing, mapping, constraining, refining, composing) on accessed models (potentially in response to user entered commands) and can generate corresponding results. Generated results can be output at user-interface 111, sent to other processing modules for further processing, and/or can be sent via electronic messages to other computer systems.

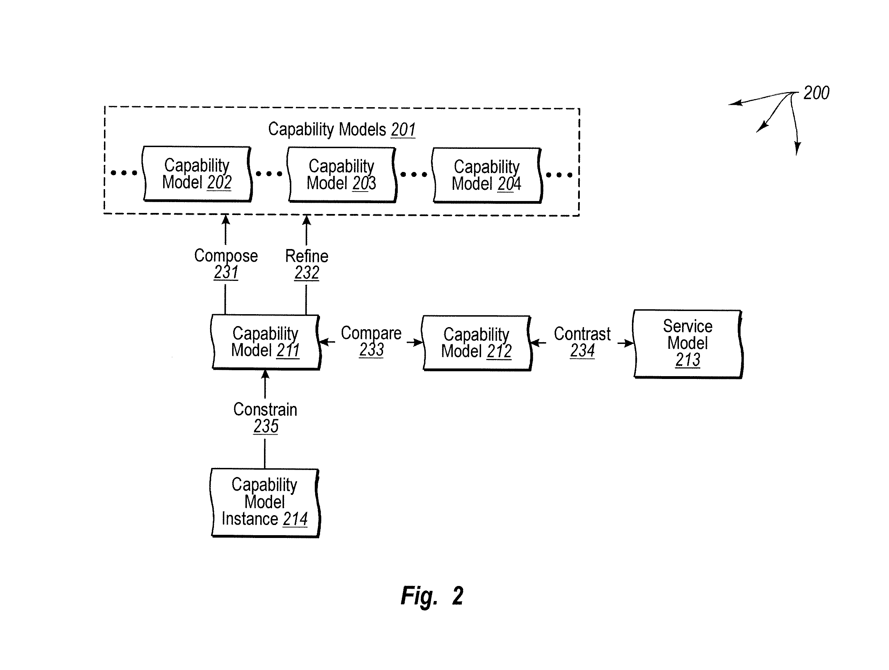

Figure 2 illustrates an example architecture 200 of operations that can be performed on business models. Architecture 200 includes capability models 201 including capability model 202, capability model 203, and capability model 204. It may that capability models 202, 203, and 204 represent more generic or core capability models, such as, for example, a generic accounts receivable capability, a generic purchase order processing capability, a generic cross-docking capability, etc.

Compose operator 231 (e.g., implemented at composition module 118) represents that one or more of capability models 202, 203, and 204 can be composed together resulting in capability model 211. Composition can include combining capability models or portions of capability models together to form a new, different, and/or combined capability model. For example, a commercial lending capability, a residential lending capability, and credit checking capability can be combined to create a mortgage application processing capability.

Refine operator 232 (e.g., implemented at refinement module 117) represents that one (e.g., when refining a single capability model) or more (e.g., when used along with compose operation 132) of capabilities models 202, 203, and 204 can be refined resulting in capability model 211. Refinement can include adapting a capability model for a specified use, such as, for example, for use in a specified industry. For example, a general accounts receivable business capability can be refined in a first manner for use in the manufacturing industry and refined in a second manner for use in the health care industry.

Constrain operator 235 (e.g., implemented at constraint module 116) represents that an instance of capability model 211 can be constrained as capability model instance 214. A capability model instance represents a real world deployed business capability. For example, an instance of an accounts receivable business capability can be constrained as the accounts receivable business capability for a specified business architecture (e.g., a software company, a grocery store, etc.).

Compare operator 233 (e.g., implemented at comparison module 113) represents that capability model 211 and capability model 212 can be compared. Capability model 211 and capability model 212 can the same (e.g., modeled in accordance with the same schema) or similarly typed capability models. For example, a shipping capability of a first business architecture can be compared to the shipping capability of a second business architecture. The results of a comparison can reveal differences and similarities in compared models. For example, comparing the shipping capabilities of the first and second business architecture can reveal that one of the shipping capabilities does not support cross-docking.

Contrast operator 234 (e.g., implemented at constraint module 117) represents that capability model 212 and service model 213 can be contrasted with one another. Capability model 212 and service model 213 can be different types of models modeled in accordance with different schemas and modeling different business layers. For example, capability model 212 can model a business capability layer in accordance with a business capability modeling schema and service model 213 can model a service network layer in accordance with a service network modeling schema. Contrasting models can reveal how the components at one business layer are supported by and/or interact with components at another business layer. For example, contrasting a business capability model to a service network model can reveal services of the service network layer that support corresponding capabilities of the business capability layer.

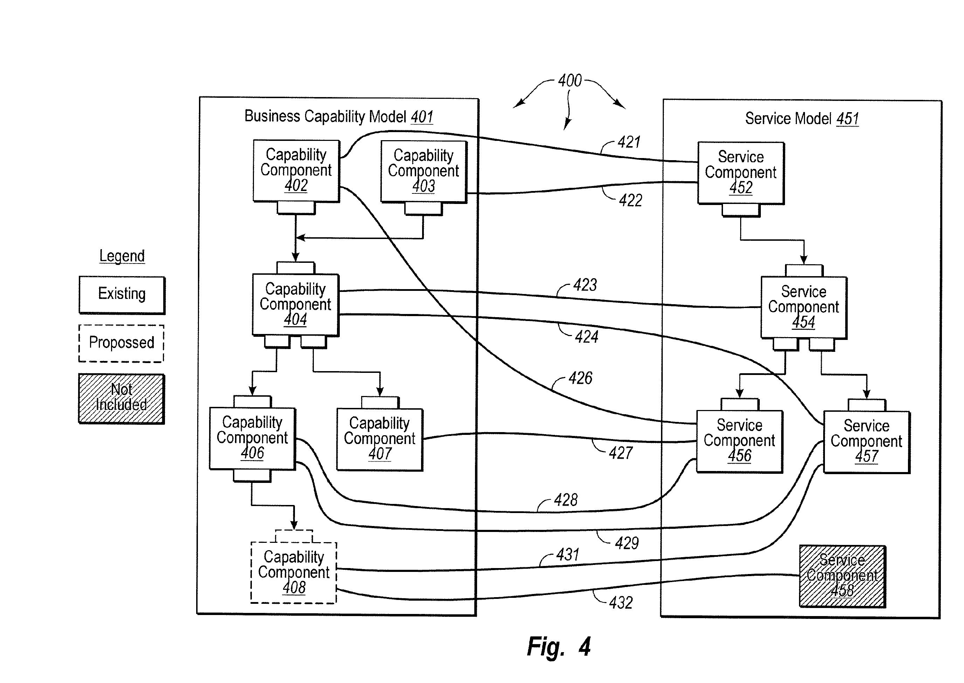

In some embodiments, a contrast operation includes generating a mapping between models of different business layers. For example, Figure 4 illustrates an example mapping 400 between a business capability model (of a business capability layer) and a service network model (of a service network layer). Mapping 400 includes business capability model 401 and service model 451. Business capability model 401 includes existing (as depicted by the solid border) capability components 402, 403, 404, 406, 407. Service model 451 includes existing (as depicted by the solid border) service components 452, 454, 456, and 477. Mappings 421, 422, 423, 424, 426, 427, 428, 429, 431, 432 show the service components that support corresponding capability components.

It may be that a service component supports a plurality of different capability components. For example, service component 452 supports both capability component 402 and 403 (as depicted by mappings 421 and 422 respectively). It may also be that a plurality of service components supports a capability component. For example, service components 454 and 457 both support capability component 404 (as depicted by mappings 423 and 424). Thus, various one-to-one, many-to-one, one-to-many, and many-to-many correspondences can result from mapping between business models of different business layers.

A mapping between different business layers can also be used to determine if existing components in one business layer are supported by components in another business layer. Thus, within example mapping 400 it can be determined if existing service components provide support for a proposed new business capability. For example, the addition of proposed capability component 408 (as depicted by the dashed border) can be simulated in business capability model 401. In response, mappings between business capability model 401 and service model 452 can be updated.

Mapping 431 indicates that service component 457 could provide support for a portion of the business capability represented by capability component 408. However, mapping 432 indicates that support for the business capability (e.g., cross-docking) represented by capability component 408 would also require service component 458 (which as depicted by cross-hatching is not currently included). This indicates to an administrator of the corresponding service network that additional infrastructure (e.g., file servers, storage capability, network access, protocols, etc.) is needed to support the business capability.

Mapping 400, as well as other similar mappings (e.g., between models of other business layers), can be presented at user-interface 111 such that a user can manipulate the mappings. Through user-interface 111, a user can simulate the addition (or removal) of a component in one model (e.g., of one business layer) and determine how the addition (or removal) of the component would affect the components in other models (e.g., of other business layers).

As previously described, various different data models can be used to model different business layers. Thus in some embodiments, data models can include at least one business capability modeling schema for modeling a business capability layer, at least one business organizational schema for modeling a business organizational layer, at least one business process flow modeling schema for modeling a business process flow layer, at least one service network layer business modeling schema for modeling a service network layer, etc.

In some embodiments, business models and data format definitions for business capabilities are generally described as indicated in Table 1.

**Table 1**

| | |
|---|---|
| Models | Models serve to group capabilities into distinct groups that describe a single business. Models can contain all the capabilities defined for the business as well as how any defined capabilities relate to each other in terms of hierarchical decomposition and process flow relationships. Models facilitate the segmentation of data in a repository into distinct business models which can be compared with one another but are separate from each other. Further, while capability data is defined within a model, other data elements of the data model are outside of the model and facilitate the comparison of different models with one another. |
| Capabilities | Capabilities are individual business functional areas that are modeled in at least three different ways in the model. Capabilities can be modeled as individual things with their own set of properties; as a decomposition hierarchy of functional areas; and as connected in simple business process flows. Coarser (or higher level) capabilities can include a set of more granular (or lower level) capabilities, such as , for example, when a higher level capability is decomposed into its constituent parts. The assignment of properties to capabilities may occur at multiple levels in a hierarchy, which can be used to control later data transformations. For example, when a higher level capability is manipulated through a transformation, corresponding lower level capabilities' properties can be considered in the transformation |
| Capability Inputs and Outputs | Capability Inputs and Outputs are the artifacts and events that are consumed and/or produced by business capabilities. They represent what is outward and visible about the behavior of the capabilities. Inputs can be consumed and outputs can be produced independently of other inputs and outputs. For example, there is no requirement that all the inputs for a capability be consumed before the capability starts. Likewise, there is no requirement that all the processing of a capability be completed before an output can be produced. |
| Processes | Processes are networks of business capabilities that are connected in a flow to illustrate and end-to-end view of a business process. Processes defme the connections between capabilities that enable larger business functions. Processes modeled in the data model can refer to cross-capability processes that represent traversal of boundaries between capabilities. |
| Connections | Connections are used to represent relationships between business capabilities. Connections can be data connections over which data, such as, for example, a business document, can flow between those capabilities. However, other types of connections are also possible. Connections may also refer to oversight or management of a business function, as frequently occurs in regulated areas of business activity. Connections can be typed such that connection types are the same across all models. Typed connections can be used to facilitate model comparisons. |
| Service Levels | Service levels refer to the general expectation of the performance of a capability. Service levels attach performance and accountability attributes to a capability in varying degrees of formality (e.g., contractual) and time (e.g., historical, current, target, and maximum). In some embodiments, a capability includes a verb and noun phrase (or such a verb-noun phrase can be construed from the capability description). Service level descriptive data associated with the capability indicates how well the capability performs the action implied by the phrase. For example, Approve Loan Application might have a service level expectation of 2 days. |

Figure 3 illustrates an example business capability modeling schema 300 that can be used for efficiently and flexibly business modeling based upon structured business capabilities. Business capability modeling schema 300 can include data formats for modeling business capability properties, business capability inputs and outputs, business capability processes, business capability connections, and business capability service level expectations. It should be understood that business capability modeling schema 300 can be one of a plurality of schemas that includes data definitions for modeling a corresponding plurality of different business layers.

Depicted in Figure 3, schema 300 includes model data format 301. Generally, model data format 301 can be described as indicated in Table 2.

**Table 2**

| Name | Data Type | Description |
|---|---|---|
| ID | int | Key to the model and is used to relate other data entities to this model. |
| Name | varchar(150) | A unique name that identifies the model. |
| OwnerID | int | Points to the owner of the model. An owner can own many models. |
| IsTemplate | bit | Controls the ability of a modeler to modify this model. If this field is true, it means that this model is to be used as a template for other models and can thus be used to compare the derived models, even after properties are changed by modelers in the derived models. Therefore, this model cannot be changed by normal editors of models. Defaults to false |
| Description | varchar(2000) | Textual description of the model. |

Depicted in Figure 3, schema 300 includes owner data format 302. Generally, owner data format 302 can be described as indicated in Table 3.

**Table 3**

| Name | Data Type | Description |
|---|---|---|
| ID | int | Key to the owner and is used to relate other data entities to this owner. |
| Name | varchar(50) | Unique name of the owner. |

Depicted in Figure 3, schema 300 includes capability data format 314. Generally, capability data format 314 can be described as indicated in Table 4.

**Table 4**

| Name | Data Type | Description |
|---|---|---|
| ID | int | Key to the capability and is used to relate other data entities to this capability. |
| Name | varchar(256) | Name that is unique within a particular model. |
| Purpose | varchar(1000) | Short description of the capability. |
| Description | varchar(8000) | A more detailed description of the capability and may explain relationships and properties of this capability as well as the capability itself. |
| SourcingType | int | This field can have three values: Internal, Outsourced, or Both. It indicates whether or not the capability is performed by an |
| | | organization that is internal (part of) the organization that "owns" the model; or an organization that is a supplier of the capability to the "owner" of the model; or it is performed by both internal and external suppliers. |
| Division | varchar(100) | Identifies the business organizational area where a capability is performed. |
| Location | varchar(100) | Geographical location where the capability is performed. |
| CopiedFromID | int | Indicates the specific capability (and hence template model) from which this capability was copied. Can be a system-set value. |
| ModelID | int | Indicates the model to which this capability belongs. |

Depicted in Figure 3, schema 300 includes capability hierarchy data format 303. Generally, capability hierarchy data format 303 can be described as indicated in Table 5.

**Table 5**

| Name | Data Type | Description |
|---|---|---|
| CapabilityID | int | Links to a capability. |
| ParentID | int | Links to a capability in the same model and indicates the parent of this capability in a hierarchical view of the model's capabilities. |
| Generation | int | Part of the lineage key which is used in certain queries. |
| Sequence | int | Part of the lineage key which is used in certain queries. |
| Lineage | varchar(20) | Indicates the entire ancestral lineage of a capability and used to perform hierarchical sorts. |

Depicted in Figure 3, schema 300 includes capability property data format 311. Generally, capability property data format 311 can be described as indicated in Table 6.

**Table 6**

| Name | Data Type | Description |
|---|---|---|
| CapabilityID | int | Links to a capability. |
| PropertyNameID | int | Links to a user-defined property. |
| Value | varchar(250) | Yalue of the property for this capability. |

Depicted in Figure 3, schema 300 includes property name data format 312. Generally, property name data format 312 can be described as indicated in Table 7.

**Table 7**

| Name | Data Type | Description |
|---|---|---|
| ID | int | Key to the property and is used to relate this property to capabilities. |
| Name | varchar(250) | Name of the property and is user defined. |
| Description | varchar(4000) | Description of what the property is and how it is to be used to describe capabilities. |
| DataType | int | Links to the DataType entity and indicates the type of data that is expected when a modeler sets a value for this property for a capability. If, for example, the modeler defines a property named "Fixed Cost Allocation", it is likely that the data type for this property would be "Currency". |

Depicted in Figure 3, schema 300 includes data type data format 313. Generally, data type data format 313 can be described as indicated in Table 8.

**Table 8**

| Name | Data Type | Description |
|---|---|---|
| ID | int | Key to the data type and is used to indicate the data type of a user defined property. This is one of a few tables that we assume are not modified by modelers as the modeling tools rely on the values being "known" in order to perform validations of property values correctly. |
| Name | varchar(20) | A friendly name of the data type. Examples are "Integer", "String", "Currency", etc. |
| Description | varchar(4000) | Any additional information about the data type that would be useful especially in guiding user selection of data types for the properties that they defme. |

Depicted in Figure 3, schema 300 includes port data format 324. Ports corresponding to a business capability can be used to transfer input into and output out of the corresponding business capability. Generally, port data format 324 can be described as indicated in Table 9.

**Table 9**

| Name | Data Type | Description |
|---|---|---|
| ID | int | Key to the port and is used to relate this port to other entities. |
| ModelID | int | Indicates that this port belongs to the related model. When dealing with a particular model, only the ports associated with the model are available to the modeler. A port is something that is input to - consumed by - a capability or output from - produced by - a capability. |
| Name | varchar(256) | A unique name within the specific model. |
| ItemType | int | Links to the ItemType entity which indicates the type of input or output, which could be electronic data, a physical item, a fax, an event, etc. |
| SchemaID | int | If the itemtype indicates that this is an electronic data record of some kind, this field links to the schema that describes the content of the data record. |
| Description | varchar(4000) | A detailed description of the input/output item. |

Depicted in Figure 3, schema 300 includes capability port data format 319. Generally, capability port data format 319 can be described as indicated in Table 10.

**Table 10**

| Name | Data Type | Description |
|---|---|---|
| ID | int | Key to the capability port and is used to relate this port to other entities. |
| CapabilityID | int | Links to the capability that is referenced by this relationship. |
| PortID | int | Links to the port that is referenced by this relationship. |
| Direction | int | Has three values and indicates whether or not the item is input into the referenced capability, output from the referenced |
| | | capability, or it flows both directions. |
| UsageType | int | Links to the UsageType entity and indicates how the capability uses this item. Examples are "Read only", "Read and update", "Create", etc. |

Depicted in Figure 3, schema 300 includes usage type data format 318. Generally, usage type data format 318 can be described as indicated in Table 11.

**Table 11**

| Name | Data Type | Description |
|---|---|---|
| ID | int | Key to the UsageType and is used to relate this usage type to the input/output items (port entity). This table is assumed to be non-modifiable by modelers as the tools rely on its specific values to process models. |
| Name | varchar(150) | A unique name that identifies the usage type. Examples include "Read only", "Read and update", "Create", etc. |
| Description | varchar(4000) | A more detailed description of the usage type and how the modeling tools may behave when dealing with a specific usage type. |

Depicted in Figure 3, schema 300 includes item type data format 316. Generally, item type data format 316 can be described as indicated in Table 12.

**Table 12**

| Name | Data Type | Description |
|---|---|---|
| ID | int | Key to the ItemType and is used to relate this item type to the input/output items (port entity). This table is assumed to be non-modifiable by modelers as the tools rely on its specific values to process models. |
| ItemTypeName | varchar(150) | A unique name that identifies the usage type. Examples include "Electronic data", "Physical item", "Fax", etc. |
| Description | varchar(4000) | A more detailed description of the item type and how the modeling tools may behave when dealing with a specific item type. |

Depicted in Figure 3, schema 300 includes schema data format 317. Generally, schema data format 317 can be described as indicated in Table 13.

**Table 13**

| Name | Data Type | Description |
|---|---|---|
| ID | int | This is the key to the Schema entity and is used to relate this item type to the input/output items (port entity). |
| Name | varchar(250) | This is a unique name for a schema. |
| Description | varchar(4000) | This may be a detailed description of the data content for a data record in the form of an XML schema (or some simplification thereof). |

Depicted in Figure 3, schema 300 includes process data format 327. Generally, process data format 327 can be described as indicated in Table 14.

**Table 14**

| Name | Data Type | Description |
|---|---|---|
| ID | int | Key to the Process entity and is used to relate this item type to connector entities, and through them to the related capabilities in the ProcessCapability entity. |
| ModelID | int | Indicates the model that these processes belong to. |
| Name | varchar(256) | A unique name for a process within this model. |
| Description | varchar(4000) | Describes the process that is modeled by this entity and the ProcessCapability entities. |

Depicted in Figure 3, schema 300 includes process capability data format 327. Generally, process capability data format 327 can be described as indicated in Table 15.

**Table 15**

| Name | Data Type | Description |
|---|---|---|
| ProcessID | int | Indicates the process that this capabilities and connections belong to. |
| StepNumber | int | Indicates the sequence of this connection in the process and is used to sort the process steps for rendering in a visual model. |
| ConnectorID | int | Links to the Connector entity and through it to the source and target capabilities of a process flow from a source capability to a destination capability. |
| Sequence | int | Indicates the sequence of a connection within a step, thereby supporting process flows that have multiple paths through it. To define a path where one leg has more steps (or flows through more capabilities) than another leg, the shorter leg is represented by entries in this table that reference the same connector but different StepNumbers. |
| Condition | varchar(4000) | Stores comments on what the conditions are that drive the process. |

Depicted in Figure 3, schema 300 includes connector data format 323. Generally, connecter data format 323 can be described as indicated in Table 16.

**Table 16**

| Name | Data Type | Description |
|---|---|---|
| ID | int | Key to the Connector entity and indicates the connection between two capabilities. This key is used to link this connection to other entities. |
| Name | varchar(256) | A comment that is associated with this connection between two capabilities. |
| FromCapabilityID | int | References the capability that is the source capability. Depending on the ConnectorType, the meaning of being the source capability may differ slightly. |
| ToCapabilityID | int | References the capability that is the target capability. Depending on the ConnectorType, the meaning of being the target capability may differ slightly. |
| ConnectorType | int | Link to the ConnectorType entity and indicates what the relationship between the two referenced capabilities really means. Examples are "Collaborative", "Controlling", "Dependent", etc. |

Depicted in Figure 3, schema 300 includes connector type data format 321. Generally, connecter type data format 321 can be described as indicated in Table 17.

**Table 17**

| Name | Data Type | Description |
|---|---|---|
| ID | int | Key to the ConnectorType entity and is used to describe the connection type in the Connector entity. |
| TypeName | varchar(50) | A unique name that describes the type of connection. Examples are "Collaborative", "Controlling", "Dependent", etc. |
| Description | varchar(4000) | A detailed description of the connection type and helps modelers understand what connections mean in their models. |

Depicted in Figure 3, schema 300 includes connector port data format 322. Generally, connecter port data format 322 can be described as indicated in Table 18.

**Table 18**

| Name | Data Type | Description |
|---|---|---|
| ConnectorID | int | A reference to the Connector entity and serves to link a specific connection between two capabilities with a specific input/output item. |
| PortID | int | A reference to the Port entity (input/output item) and serves to identify the input/output item that flows along a specific connection. |
| Comments | varchar(4000) | More detailed commentary about this flow of an item along this connection. |

Depicted in Figure 3, schema 300 includes role data format 309. Generally, role data format 309 can be described as indicated in Table 19.

**Table 19**

| Name | Data Type | Description |
|---|---|---|
| ID | int | Key to the Role entity and is used to relate this role to Capability entities. |
| ModelID | int | Indicates what model this role entity belongs to. |
| Name | varchar(100) | A unique name for the role within this model. A role describes a type of person or user involved in performing capabilities. |
| Description | varchar(2000) | Provides a description of the role and may provide guidance to modelers in their choice of roles to associate with capabilities. |

Depicted in Figure 3, schema 300 includes capability role data format 308. Generally, capability role data format 308 can be described as indicated in Table 20.

**Table 20**

| Name | Data Type | Description |
|---|---|---|
| CapabilityID | int | References a specific capability and serves to link that capability with a specific role. |
| RoleID | int | References a specific role and links it to the referenced capability. |
| Count | int | Indicates the number of people in this role that are required to perform this capability. A value of '0' indicates that the role participation has not been quantified. |

Depicted in Figure 3, schema 300 includes SLE type data format 304. Generally, SLE type data format 304 can be described as indicated in Table 21.

**Table 21**

| Name | Data Type | Description |
|---|---|---|
| ID | int | Key to the SLEType entity and is used to relate this role to CapabilitySLE entities. |
| Name | varchar(100) | Uniquely names the type of service level that is described in this entity. This entity is assumed to be read-only by modelers because the modeling tools rely on the value of these entries to visualize service levels. Some values for service level types include "Duration", "Throughput", "Monetary Cost", "Time Cost" and "Concurrency". |
| Description | varchar(4000) | A detailed description of the service level type and how to describe specific service levels related to capabilities. |

Depicted in Figure 3, schema 300 includes Capability SLE data format 306. Generally, Capability SLE data format 306 can be described as indicated in Table 22.

**Table 22**

| Name | Data Type | Description |
|---|---|---|
| ID | int | Key to the Role entity and is used to relate this role to Capability entities. |
| SLETypeID | int | References the SLEType entity and identifies a specific way to measure a service level. |
| Name | varchar(50) | A unique name for the service level definition. |
| CapabilityID | int | References the capability to which this service level applies. |
| MeasurementPeriodType | varchar(50) | Names the unit of measure for the service level. For "Duration" type service levels, this should be a time period. For a "Monetary Cost" SLE type, "Dollars" or "Thousands of dollars" would be appropriate. |
| MeasurementPeriodLen | int | If the SLE type references a "Throughput" type of SLE, this field indicates the length of the measurement period for throughput. |
| MetricCount | int | An actual (current status/performance or historical performance) measurement of the SLE, such as the number of days of duration, the number of items completed for throughput, the amount of dollars for monetary cost, etc. |
| Goal | int | A target for future performance such as the number of days of duration, the number of items completed for throughput, the amount of dollars for monetary cost, etc. |
| VarianceThreshold | int | How much variation in performance (e.g., from a goal) is tolerated before a variation is noted or notification is sent. For example, when a variance threshold is exceeded an electronic mail message can be sent to appropriate management personnel |
| Description | varchar(2000) | A detailed description of the SLE for this capability. |

Depicted in Figure 3, schema 300 includes Capability SLE Port data format 307. Generally, Capability SLE port data format 307 can be described as indicated in Table 23.

**Table 23**

| | | |
|---|---|---|
| CapabilitySLEID | int | References a particular service level for a specific capability as described in a CapabilitySLE entity. It serves to link a particular service level to a particular input or output item. |
| PortID | int | References a particular input or output item of a capability and links a service level to the specific item that is being measured. For example, this might reference mortgage approvals for a duration service level for a mortgage processing capability and the entire service level defmition might thereby describe that 100 mortgage approvals are completed every day for the mortgage processing capability. |

It should be understood that schema 300 is merely one example of a business capability modeling schema. It would be apparent to one skilled in the art, after having reviewed this description, that embodiments of the present invention can be used with a wide variety of other business capability modeling schemas, in addition to schema 300. Further, modeling business capabilities does not require that capability attributes for all the data formats in schema 300 be accessible. For example, a capability and connecter can be used to model a business capability based on capability data format 314 and connector data format 323, without accessing capability attributes correspond to other data formats. Thus, schema 300 defines data formats for business capability attributes that are accessed, but does not require that all data formats be populated to generate a business capability model.

It should be understood that schemas for one or more business layers can also include data definitions for data that is used to map between the one or more business layers. For example, a business capability schema can include data definitions representing the service network layer components needed to support a modeled business capability component. On the other hand, a service network schema can include data definitions for supported business capability layer components. Similarly, other schemas, such as, for example, a business process flow schema or business organizational schema, can include data definitions for data that is used to map to other business layers.

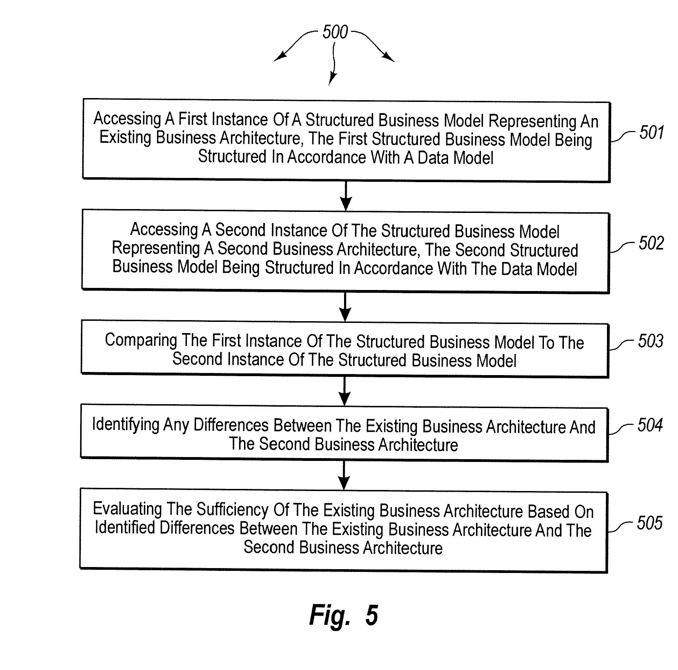

Figure 5 illustrates an example flowchart of a method 500 for comparing similarly typed business models. Method 500 will be described with respect to modules and data in computer architecture 100.

Method 500 includes an act of accessing a first instance of a structured business model representing an existing business architecture, the first structured business model being structured in accordance with a data model (act 501). For example, computer system 101 can access capability model 122 representing a business architecture. Capability model 122 can be structured in accordance with a business capability schema (e.g., schema 300).

Method 500 includes an act of accessing a second instance of the structured business model representing a second business architecture, the second structured business model being structured in accordance with the data model (act 502). For example, computer system 101 can access best practices capability model 123. Best practices capability model 123 can be a model that represents the business capabilities of best practices business architecture for a specific industry. For example, best practices capability model 123 can incorporate the best practices for the manufacturing industry, health care industry, retail industry, etc. Best practices can be agreed to by industry experts, academia, etc. However, virtually any best practices can be used.

Alternately, computer system 101 can access proposed acquisition capability model 124. Proposed acquisition capability model 124 can be a model representing the business architecture of a business that is to be acquired (e.g., by the business that is performing the comparison).

Method 500 includes an act of comparing the first instance of the structured business model to the second instance of the structured business model (act 503). For example, comparison module 113 can compare (e.g., using compare operator 233) capability model 122 to best practices capability model 123. Alternately, comparison module 113 can compare capability model 122 to proposed acquisition capability model 124. Comparison can include comparing individual business capabilities from different models to one another.

Method 500 includes an act of identifying any differences between the existing business architecture and the second business architecture (act 504). For example, comparison module 113 can identify any differences between capability model 122 and best practices capability model 123. Alternately, comparison module 113 can identify any differences between capability model 122 and proposed acquisition capability model 124.

Method 500 includes an act of evaluating the sufficiency of the existing business architecture based on identified differences between the existing business architecture and the second business architecture (act 505). For example, based on identified differences between 122 and 123, computer system 101 can evaluate how closely the business capabilities represented in capability model 122 correspond to industry best practices. Alternately, based on identified differences between 122 and 124, computer system 101 can evaluate how closely the business capabilities represented in capability model 122 correspond to the business capabilities represented in proposed acquisition capability model 124. Thus, it can be determined if an acquisition would provide an acquiring business with any different, new, increased, etc., business capabilities. Results of the evaluation can be presented at user-interface 111 and/or transferred to some other computer system as results 161.

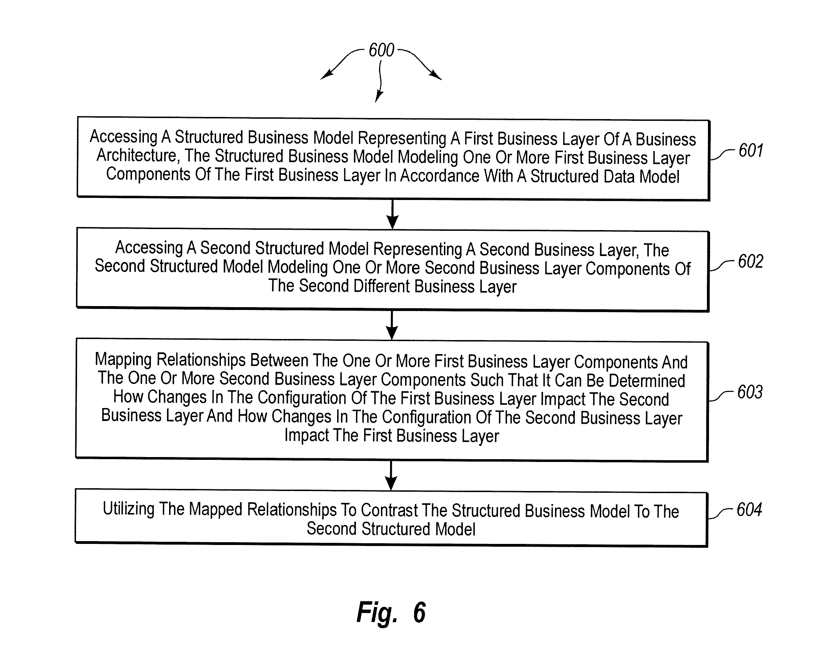

Figure 6 illustrates an example flowchart of a method 600 for contrasting different types of business models representing corresponding different layers of a business architecture. Method 600 will be described with respect to modules and data in computer architecture 100 and the components and mappings in mapping 400.

Method 600 includes an act of accessing a structured business model representing a first business layer of a business architecture, the structured business model modeling one or more first business layer components of the first business layer in accordance with a structured data model (act 601). For example, computer system 101 can access capability model 122 representing a business capability layer of a business architecture. Capability model 122 can model one or more business capability components of business capability layer 121 in accordance with a capability modeling schema (e.g., schema 300). However, it may be that a structured business model representing some other first business layer, such as, for example, service network layer 131, business process flow layer 141, business organizational layer 141, is accessed. The structured business model can model one or more components of the corresponding first business layer in accordance with an appropriate schema.

Method 600 includes an act of accessing a second structured model representing a second business layer, the second structured model modeling one or more second business layer components of the second different business layer (act 602). For example, computer system 101 can access service model 132 representing a service network layer of the business architecture. Service model 132 can model one or more service components of service network layer 131 in accordance with a service modeling schema. However, it may be that a second structured model representing some other second business layer, such as, for example, business capability layer 121, business process flow layer 141, business organizational layer 141, is accessed. The second structured business model can model one or more components of the corresponding second business layer in accordance with an appropriate schema.

Method 600 includes an act of mapping relationships between the one or more first business layer components and the one or more second business layer components (act 603). Based on the mapping, it can be determined how changes in the configuration of the first business layer impact the second business layer and how changes in the configuration of the second business layer impact the first business layer. For example, contrast module 114 can map one or more capability components of capability model 122 to one or more corresponding service components of service model 131 (similar to mapping 400). However, it may be that relationships between components of other business layers are mapped. For example, it may be that contrast module 114 maps one or more process flow components of process flow model 142 to one or more corresponding organizational components of organizational model 153.

Method 600 includes an act of utilizing the mapped relationships to contrast the structured business model to the second structured model (act 604). For example, contrast module 114 can contrast mappings between the components of capability model 122 and service model 132 to contrast capability model 122 to service model 132. Contrasting models of different business layers can reveal how the business layers interact and can provide a business with an indication of needed and/or duplicated components. Results of mapping and contrasting components of different business layers can be presented at user-interface 11 and/or transferred to some other computer system as results 161.

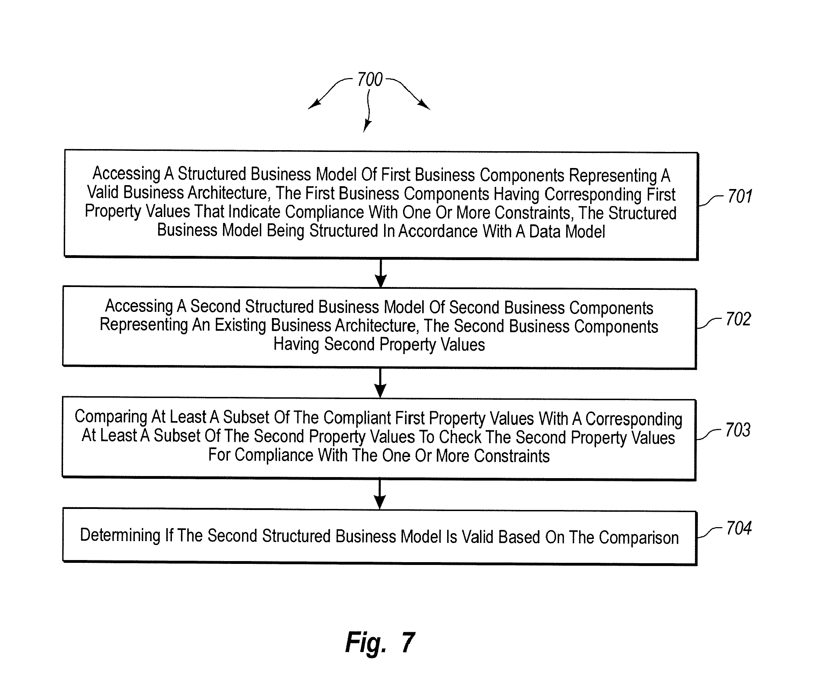

Figure 7 illustrates an example flowchart of a method 700 for validating that a business model complies with one or more constraints. Method 700 will be discussed with respect to the components of computer architecture 100.

Method 700 includes an act of accessing a structured business model of first business components representing a valid business architecture, the first business components having corresponding first property values that indicate compliance with one or more constraints, the structured business model being structured in accordance with a data model (act 701). For example, computer system 101 can access process flow model 142 having one or more process flow components representing a (an existing or simulated) business architecture that is valid based on specified criteria. Process flow model 142 can include a configuration of process flow components that adhere to industry best practices or some other set of rules that is advantageous to a business.

Process flow model 142 can include property values that indicate compliance with one or more constraints, such as, for example, constraints on a more general model used to generate an instance of the more general model that complies with the constraints. The first property values can be the value portion of one or more name/value pairs include in process flow model 142 and formatted in accordance with a process flow schema. Process flow model 142 can be a process flow model for actual business architecture or can be a simulated process flow model.

Method 700 includes an act of accessing a second structured business model of second business components representing an existing business architecture, the second business components having second property values (act 702). For example, computer system 101 can access process flow model 143 having one or more process flow components representing an existing business architecture. The second property values can be the value portion of one or more name/value pairs include in process flow model 143 and formatted in accordance with the process flow schema.

Method 700 includes an act of comparing at least a subset of the compliant first property values with a corresponding at least a subset of the second property values to check the second property values for compliance with the one or more constraints (act 703). For example, constraint module 116 can compare a portion of the property values in process flow model 142 to a corresponding portion of the property values in process flow model 143.

Method 700 includes an act of determining if the second structured business model is valid based on the comparison (act 704). For example, constraint module 116 can determine if process flow model 143 is valid based on property value comparison. That is, constraint module 116 can determine if process flow model 143 was instantiated in accordance with same constraints used to instantiate process flow model 142.

It may be that compliance with a constraint is indicated when a second property value matches a first property value, such as, for example, when both the first and second property value equal 2. However, it may also that compliance with a constraint is indicated when a second property value is within a specified threshold of the first property value, such as, for example, within 10% of the first property value. It may also be that compliance with a constraint is indicated when a second property value is within a specified range, such as, for example, between 50 and 100. Results of checking constraints can be presented at user-interface 111 and/or transferred to some other computer system as results 161.

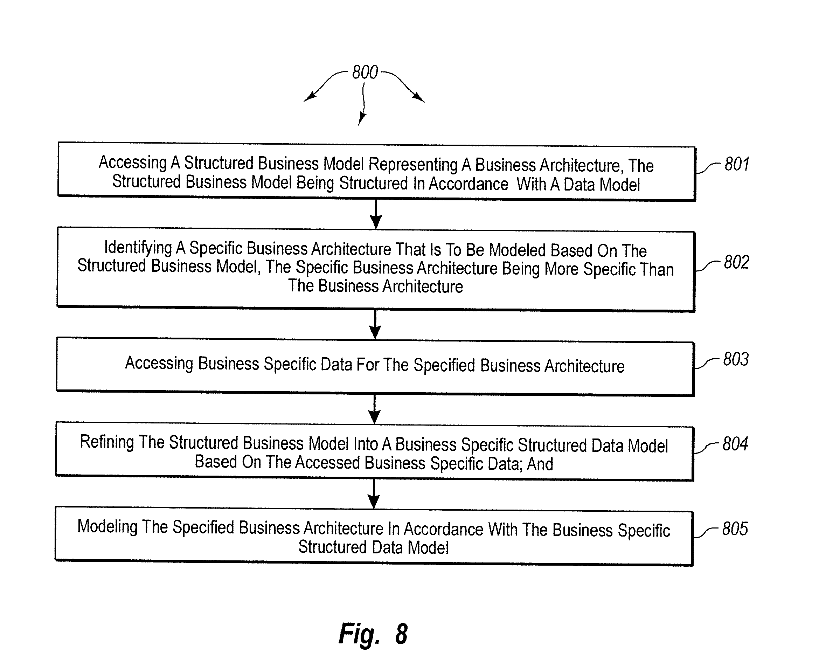

Figure 8 illustrates an example flowchart of a method 800 for refining a business model. Method 800 will be discussed with respect to the components of computer architecture 100.

Method 800 includes an act of accessing a structured business model representing a business architecture, the structured business model being structured in accordance with a data model (act 801). For example, computer system 100 can access organizational model 152 representing a generic organizational hierarchy for supporting a purchase order requisition business architecture. Organizational model 152 can be structured in accordance with an organizational schema.

Method 800 includes an act of identifying a specific business architecture that is to be modeled based on the structured business model, the specific business architecture being more specific than the business architecture (act 802). For example, refinement module 117 can identify that a healthcare (or some other industry or otherwise more specific) purchase order requisition business architecture is to be modeled based on organizational model 152.

Method 800 includes an act of accessing business specific data for the specified business architecture (act 803). For example, refinement module 117 can access healthcare industry data (or some other industry or otherwise more specific data) for modeling a healthcare (or some other industry or otherwise more specific) purchase order requisition business architecture.

Method 800 includes an act of refining the structured business model into a business specific structured data model based on the accessed business specific data (act 804). For example, refinement module 117 can implement a refine operator to refine the organizational schema (e.g., adding, removing, altering data formats) used to generate organizational model 152. Thus, refinement module 117 can refine the organization schema into a healthcare specific (or some other industry or otherwise more specific) organizational schema based on the healthcare industry (or the other industry or otherwise more specific) data. For example, a healthcare purchasing order requisition business architecture may be required to have various safety controls that are not required in other industries. These additional safety controls may require additional specially trained personnel. Thus, an organizational schema can be altered to include data formats for representing the specially trained personnel.

Method 800 includes an act of modeling the specified business architecture in accordance with the business specific structured data model (act 805). For example, computer system 101 can generate an organization model representing an organizational hierarchy of a healthcare (or other industry or otherwise more specific) purchase order requisition business architecture in accordance with the healthcare industry specific (or the other industry or otherwise more specific) organizational schema. The more specific model can be presented at user-interface 111 and/or transferred to some other computer system as results 161.

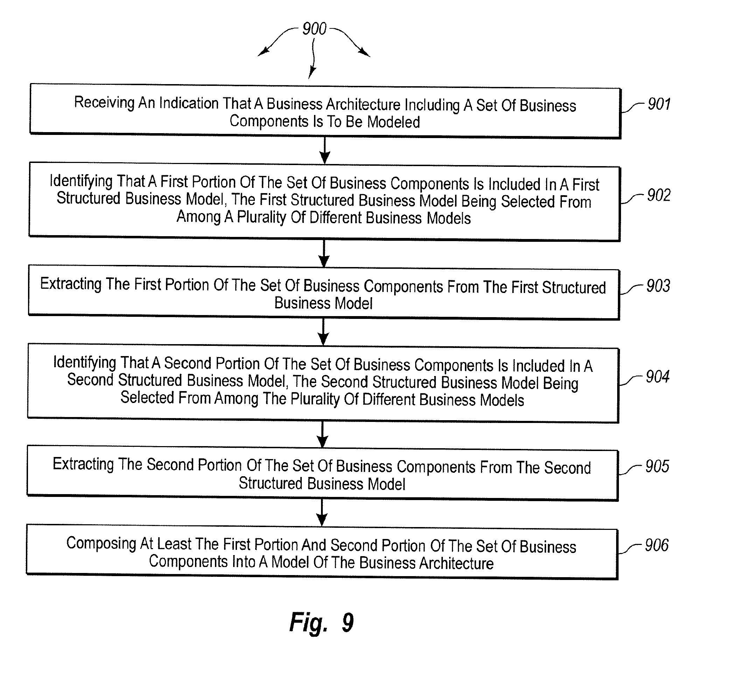

Figure 9 illustrates an example flowchart of a method 900 for composing a business model. Method 900 will be discussed with respect to the components of computer architecture 100.

Method 900 includes an act of receiving an indication that a business architecture including a set of business components is to be modeled (act 901). For example, computer system 101 can receive an indication that a set of services are to be modeled.

Method 900 includes an act of identifying that a first portion of the set of business components is included in a first structured business model, the first structured business model being selected from among a plurality of different business models (act 902). For example, composition module 118 can identify that a first portion of service components are included in service model 132. Method 900 includes an act of extracting the first portion of the set of business components from the first structured business model (act 903). For example, composition module 118 can extract some or all of the service components from service model 132.

Method 900 includes an act of identifying that a second portion of the set of business components is included in a second structured business model, the second structured business model being selected from among the plurality of different business models (act 904). For example, composition module 118 can identify that a second portion of service components are included in service model 133. Method 900 includes an act of extracting the second portion of the set of business components from the second structured business model (act 905). For example, composition module 118 can extract some or all of the service components from service model 133.

Method 900 includes an act of composing at least the first portion and second portion of the set of business components into a model of the business architecture (act 906). For example, composition model 118 can compose service components from service models 132 and 133 into a new service model. The new service model can be presented at user-interface 111 and/or transferred to some other computer system as results 161.

It should be understood that embodiments of the present invention can also implement combinations of formal operations. For example, a refine operator can be used to refine a new business model that was previously composed from portions of a plurality of other business models. Subsequent to refinement, the new business model can be check from compliance with constraints.

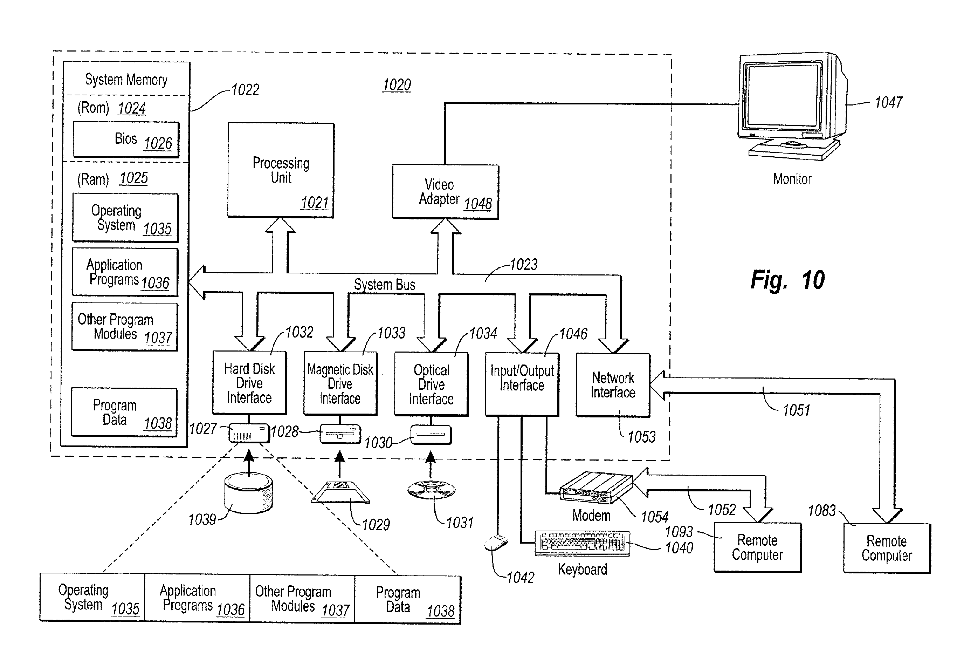

Figure 10 and the following discussion are intended to provide a brief, general description of a suitable computing environment in which the invention may be implemented. Although not required, the invention can be implemented in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

With reference to Figure 10, an example system for implementing the invention includes a general-purpose computing device in the form of computer system 1020, including a processing unit 1021, a system memory 1022, and a system bus 1023 that couples various system components including the system memory 1022 to the processing unit 1021. Processing unit 1021 can execute computer-executable instructions designed to implement features of computer system 1020, including features of the present invention. The system bus 1023 may be any of several types of bus structures including a memory bus or memory controller, a peripheral bus, and a local bus using any of a variety of bus architectures. The system memory includes read only memory ("ROM") 1024 and random access memory ("RAM") 1025. A basic input/output system ("BIOS") 1026, containing the basic routines that help transfer information between elements within computer system 1020, such as during start-up, may be stored in ROM 1024.

The computer system 1020 may also include magnetic hard disk drive 1027 for reading from and writing to magnetic hard disk 1039, magnetic disk drive 1028 for reading from or writing to removable magnetic disk 1029, and optical disk drive 1030 for reading from or writing to removable optical disk 1031, such as, or example, a CD-ROM or other optical media. The magnetic hard disk drive 1027, magnetic disk drive 1028, and optical disk drive 1030 are connected to the system bus 1023 by hard disk drive interface 1032, magnetic disk drive-interface 1033, and optical drive interface 1034, respectively. The drives and their associated computer-readable media provide nonvolatile storage of computer-executable instructions, data structures, program modules, and other data for the computer system 1020. Although the example environment described herein employs magnetic hard disk 1039, removable magnetic disk 1029 and removable optical disk 1031, other types of computer readable media for storing data can be used, including magnetic cassettes, flash memory cards, digital versatile disks, Bernoulli cartridges, RAMs, ROMs, and the like.

Program code means comprising one or more program modules may be stored on hard disk 1039, magnetic disk 1029, optical disk 1031, ROM 1024 or RAM 1025, including an operating system 1035, one or more application programs 1036, other program modules 1037, and program data 1038. A user may enter commands and information into computer system 1020 through keyboard 1040, pointing device 1042, or other input devices (not shown), such as, for example, a microphone, joy stick, game pad, scanner, or the like. These and other input devices can be connected to the processing unit 1021 through input/output interface 1046 coupled to system bus 1023. Input/output interface 1046 logically represents any of a wide variety of different interfaces, such as, for example, a serial port interface, a PS/2 interface, a parallel port interface, a Universal Serial Bus ("USB") interface, or an Institute of Electrical and Electronics Engineers ("IEEE") 1394 interface (i.e., a FireWire interface), or may even logically represent a combination of different interfaces.

A monitor 1047 or other display device is also connected to system bus 1023 via video interface 1048. Speakers or other audio output device is also connected to system bus 1023 via an audio interface. Other peripheral output devices (not shown), such as, for example, printers, can also be connected to computer system 1020.

Computer system 1020 is connectable to computer networks, such as, for example, an office-wide or enterprise-wide computer network, a home network, an intranet, and/or the Internet. Computer system 1020 can exchange data with external sources, such as, for example, remote computer systems, remote applications, and/or remote databases over such computer networks.

Computer system 1020 includes network interface 1053, through which computer system 1020 receives data from external sources and/or transmits data to external sources. As depicted in Figure 1, network interface 1053 facilitates the exchange of data with remote computer system 1083 via link 1051. Network interface 1053 can logically represent one or more software and/or hardware modules, such as, for example, a network interface card and corresponding Network Driver Interface Specification ("NDIS") stack. Link 1051 represents a portion of a computer network (e.g., an Ethernet segment), and remote computer system 1083 represents a node of the computer network.

Likewise, computer system 1020 includes input/output interface 1046, through which computer system 1020 receives data from external sources and/or transmits data to external sources. Input/output interface 1046 is coupled to modem 1054 (e.g., a standard modem, a cable modem, or digital subscriber line ("DSL") modem), through which computer system 1020 receives data from and/or transmits data to external sources. As depicted in Figure 10, input/output interface 1046 and modem 1054 facilitate the exchange of data with remote computer system 1093 via link 1052. Link 1052 represents a portion of a computer network and remote computer system 1093 represents a node of the computer network.

While Figure 10 represents a suitable operating environment for the present invention, the principles of the present invention may be employed in any system that is capable of, with suitable modification if necessary, implementing the principles of the present invention. The environment illustrated in Figure 10 is illustrative only and by no means represents even a small portion of the wide variety of environments in which the principles of the present invention may be implemented.

In accordance with the present invention, comparison modules, mapping modules, constraint modules, refinement modules, and composition modules, user-interfaces, as well as associated data including business modeling schemas, business models, and results produced by business model operations may be stored and accessed from any of the computer-readable media associated with computer system 1020. For example, portions of such modules and portions of associated program data may be included in operating system 1035, application programs 1036, program modules 1037 and/or program data 1038, for storage in system memory 1022.

When a mass storage device, such as, for example, magnetic hard disk 1039, is coupled to computer system 1020, such modules and associated program data may also be stored in the mass storage device. In a computer network environment, program modules depicted relative to computer system 1020, or portions thereof, can be stored in remote memory storage devices, such as, system memory and/or mass storage devices associated with remote computer system 1083 and/or remote computer system 1093. Execution of such modules may be performed in a distributed environment as previously described.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes, which come within the meaning and range of equivalency of the claims, are to be embraced within their scope.

What is claimed and desired secured by United States Letters Patent is:

## Claims

1. At a computer system, a method of comparing similarly typed business models, the method comprising:
an act of accessing a first instance of a structured business model representing an existing business architecture, the first structured business model being structured in accordance with a data model;
an act of accessing a second instance of the structured business model representing a second business architecture, the second structured business model being structured in accordance with the data model;
an act of comparing the first instance of the structured business model to the second instance of the structured business model;
an act of identifying any differences between the existing business architecture and the second business architecture; and
an act of evaluating the sufficiency of the existing business architecture based on identified differences between the existing business architecture and the second business architecture.

2. The method as recited in claim 1, wherein the act of accessing a first instance of a structured business model representing an existing business architecture comprises an act of accessing a first instance of a business capability model.

3. The method as recited in claim 2, wherein the act of accessing a second instance of the structured business model representing an existing business architecture comprises an act of accessing a second instance of the business capability model.

4. The method as recited in claim 1, wherein the act of comparing the first instance of the structured business model to the second instance of the structured business model comprises an act of comparing an existing structured business model to a best practices structured business model.

5. The method as recited in claim 1, wherein the act of comparing the first instance of the structured business model to the second instance of the structured business model comprises an act of comparing an existing structured business model to a structured business model of a proposed acquisition.

6. The method as recited in claim 1, wherein the act of evaluating the sufficiency of the existing business architecture based on identified differences between the existing business architecture and the second business architecture comprises an act of determining if the existing business architecture satisfies industry best practices.

7. The method as recited in claim 1, wherein the act of evaluating the sufficiency of the existing business architecture based on identified differences between the existing business architecture and the second business architecture comprises an act of determining if the second business architecture would provide the existing business architecture with any different, new, or increased business capabilities.

8. At a computer system, a method of contrasting different types of business models representing corresponding different layers of a business architecture, the method comprising:
an act of accessing a structured business model representing a first business layer of a business architecture, the structured business model modeling one or more first business layer components of the first business layer in accordance with a structured data model;
an act of accessing a second structured model representing a second business layer, the second structured model modeling one or more second business layer components of the second different business layer; and
an act of mapping relationships between the one or more first business layer components and the one or more second business layer components such that it can be determined how changes in the configuration of the first business layer impact the second business layer and how changes in the configuration of the second business layer impact the first business layer;
an act of utilizing the mapped relationships to contrast the structured business model to the second structured model.

9. The method as recited in claim 8, wherein the act of accessing a structured business model representing a first business layer of a business architecture comprises an act of accessing a structured business model of a business capability layer.

10. The method as recited in claim 8, wherein the act of accessing a structured business model of a business capability layer comprises an act of accessing a business capability model structured in accordance with a capability schema

11. The method as recited in claim 9, wherein the act of accessing a second structured model representing a second business layer comprises an act of accessing a structured business model of a service network layer.

12. The method as recited in claim 8, where the act of an act of mapping relationships between the one or more first business layer components and the one or more second business layer components comprises an act of mapping between business capability layer components and network service layer components.

13. The method as recited in claim 8, wherein the act of utilizing the mapped relationships to contrast the structured business model to the second structured model comprises an act of utilizing the mapped relationships to identify how a business capability layer interacts with a network service layer.

14. At a computer system, a method for validating that a business model complies with one or more constraints, the method comprising:
an act of accessing a structured business model of first business components representing a valid business architecture, the first business components having corresponding first property values that indicate compliance with one or more constraints, the structured business model being structured in accordance with a data model;
an act of accessing a second structured business model of second business components representing an existing business architecture, the second business components having second property values;
an act of comparing at least a subset of the compliant first property values with a corresponding at least a subset of the second property values to check the second property values for compliance with the one or more constraints; and
an act of determining if the second structured business model is valid based on the comparison.

15. The method as recited in claim 14, wherein the act of accessing a structured business model of first business components representing a valid business architecture comprises an act of accessing a business capability model that complies with one or more constraints.

16. The method as recited in claim 15, wherein the act of accessing a business capability model that complies with one or more constraints comprise an act of accessing a business capability model structured in accordance with a capability schema.

17. The method as recited in claim 15, wherein the act of accessing a business capability model that complies with one or more constraints comprises an act of accessing a one or more name/value pairs.

18. The method as recited in claim 14, wherein the act of accessing a second structured business model of second business components representing an existing business architecture comprises an act of accessing a second business capability model of an existing business architecture.

19. The method as recited in claim 14, wherein the act of determining if the second structured business model is valid based on the comparison comprises an act of determining that one or more of the first property values and a corresponding one or more of the second property values have equal values.

20. The method as recited in claim 14, wherein the act of determining if the second structured business model is valid based on the comparison comprises an act of determining that one or more of the first property values are within a specified threshold of a corresponding one or more of the second property values.
